# EUROPEAN PATENT APPLICATION

(11) **EP 4 116 878 A1**
(43) Date of publication of application: **11.01.2023**
(21) Application number: 20928777.0
(22) Date of filing: 30.03.2020
(51) Int. Cl.: G06K 9/62

(54) **TARGET RECOGNITION METHOD AND DEVICE**

(71) Applicant: Huawei Technologies Co., Ltd., Shenzhen, Guangdong 518129, (CN)
(72) Inventor: LIU, Tao, Shenzhen, Guangdong 518129 (CN); XU, Huanhai, Shenzhen, Guangdong 518129 (CN); WEI, Xuyun, Shenzhen, Guangdong 518129 (CN)
(74) Representative: Maiwald GmbH
(86) International application number: PCT/CN2020/082217
(87) International publication number: WO 2021/195896

(57) **Abstract**

Embodiments of this application provide a target recognition method and apparatus. The method includes: performing first image processing on first image data, to obtain first AI input data; performing second image processing on second image data, to obtain second AI input data, where exposure duration corresponding to the first AI input data is different from exposure duration corresponding to the second AI input data, or a dynamic range corresponding to the first AI input data is different from a dynamic range corresponding to the second AI input data, and both the first image data and the second image data are raw image data generated by an image sensor; and performing target recognition based on the first AI input data and the second AI input data, and determining target information. According to embodiments of this application, target recognition accuracy in a wide dynamic range scene can be improved.

## Description

### TECHNICAL FIELD

This application relates to the field of artificial intelligence, and in particular, to a target recognition method and apparatus.

### BACKGROUND

With the development of the information era, in the Internet of things era, major security protection vendors launch artificial intelligence (artificial intelligence, AI) products, for example, an AI camera. An independent AI algorithm chip is mounted in the AI camera, and integrates a plurality of functions, for example, perimeter alarm, facial recognition, behavior analysis, intrusion alarm, and object recognition. AI algorithms can be used to extract a feature of video content and understand the video content, for example, detecting a moving object and identifying attributes such as a person and a vehicle by analyzing video content in real time.

In the security monitoring field, a wide dynamic range (wide dynamic range, WDR, or high dynamic range, HDR) scene is often encountered when a monitoring camera is installed and used. In the wide dynamic range scene, both a bright area (bright area) and a dark area (dark area) usually exist. In the wide dynamic range scene, overexposure in a bright area or a dark area that is too dark often occurs in a video obtained by the AI camera in a linear mode. Consequently, target information in the bright area or the dark area is lost, and target recognition accuracy of the AI algorithm is low.

### SUMMARY

Embodiments of this application disclose a target recognition method and apparatus, to improve target recognition accuracy in a wide dynamic range scene.

According to a first aspect, an embodiment of this application provides a target recognition method, including: performing first image processing on first image data, to obtain first artificial intelligence AI input data; performing second image processing on second image data, to obtain second AI input data, where exposure duration corresponding to the first AI input data is different from exposure duration corresponding to the second AI input data, or a dynamic range corresponding to the first AI input data is different from a dynamic range corresponding to the second AI input data, and both the first image data and the second image data are raw image data generated by an image sensor; and performing target recognition based on the first AI input data and the second AI input data, and determining target information.

Specifically, the target information may be comprehensively determined based on a target recognition result of one stream of AI input data and supplemented by a target recognition result of the other stream of AI input data. For example, the raw image data is raw data.

In this embodiment of this application, a plurality of image signals are processed for the raw image data output by the image sensor, to obtain a plurality of streams of AI input data. The plurality of streams of AI input data correspond to different exposure duration or different dynamic ranges. Further, target recognition may be performed, based on the plurality of streams of AI input data, by using an AI algorithm, and target information of areas with different brightness in a target photographing scene may be determined based on the AI input data corresponding to different exposure duration or different dynamic ranges, to comprehensively obtain a final target recognition result. This can improve AI target recognition accuracy in a wide dynamic range scene.

In a possible implementation, the first AI input data is wide dynamic range data obtained after WDR processing, and the second AI input data is linear data obtained after linear processing. In other words, a dynamic range corresponding to the first AI input data is different from a dynamic range corresponding to the second AI input data.

In a possible implementation, both the first image processing and the second image processing are linear processing, image content corresponding to the first image data is the same as image content corresponding to the second image data, and exposure duration corresponding to the first image data is different from exposure duration corresponding to the second image data.

In this embodiment of this application, linear processing may be performed on two streams of image data output by the image sensor, to obtain the first AI input data and the second AI input data. For example, one processing is referred to as main processing, and the other processing is referred to as auxiliary processing. An image processing result obtained through the main processing may be sent to a display for display, and an auxiliary processing result is used as an input of an AI recognition algorithm. A final target recognition result is obtained, based on the main processing result and the auxiliary processing result, by using the AI recognition algorithm. In this embodiment of this application, both the main processing and the auxiliary processing are linear processing. When exposure duration of image data corresponding to the main processing is long, exposure duration of image data corresponding to the auxiliary processing is short. When the exposure duration of the image data corresponding to the main processing is short, the exposure duration of the image data corresponding to the auxiliary processing is long. Image details of areas with different brightness may be obtained from image data with different exposure duration. A final target recognition result is obtained, based on recognition results of the two streams of AI input data, by using the AI algorithm. This can improve AI target recognition accuracy in a wide dynamic range scene.

In a possible implementation, image data output by the image sensor is one stream of image data, and before the performing first image processing on first image data, the method further includes: splitting the image data output by the image sensor, to obtain the first image data and the second image data.

In this embodiment of this application, the sensor combines two frames of data into one stream of data, and sends the one stream of data to an image processor. The image processor splits the one stream of data into two streams of data, performs WDR processing based on the two streams of data, to obtain a main processing result, and separately performs linear processing on the two streams of data, to obtain two auxiliary processing results. Further, target recognition is performed, based on the WDR processing result and the two linear processing results, by using the AI recognition algorithm. This can improve target recognition accuracy in a WDR scene. It should be understood that the WDR processing and the linear processing may be implemented by a same image processor, or may be implemented by different image processors.

In a possible implementation, the first image processing is wide dynamic range WDR processing, the second image processing is linear processing, image content corresponding to the first image data is the same as image content corresponding to the second image data, and exposure duration corresponding to the first image data is different from exposure duration corresponding to the second image data. The performing first image processing on first image data, to obtain first AI input data includes: performing first image processing based on the first image data and the second image data, to obtain the first AI input data. The method further includes: performing second image processing on the first image data, to obtain third AI input data. The performing target recognition based on the first AI input data and the second AI input data, and determining target information includes: performing target recognition based on the first AI input data, the second AI input data, and the third AI input data, and determining the target information.

In this embodiment of this application, WDR processing and linear processing may be separately performed on two streams of image data output by the image sensor. WDR processing is performed on the two streams of image data, to obtain the first AI input data, and linear processing is separately performed on the two streams of image data, to obtain the second AI input data and the third AI input data. A final target recognition result is obtained, based on recognition results of the three streams of AI input data, by using the AI algorithm. This can improve AI target recognition accuracy in a wide dynamic range scene.

In a possible implementation, the performing first image processing based on the first image data and the second image data, to obtain the first AI input data includes: performing first image processing based on the first image data, the second image data, and third image data, to obtain the first AI input data. The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data.

In this embodiment of this application, WDR processing may be performed on three streams of image data with different exposure duration, so that a balance between a bright area and a dark area in a WDR video obtained after WDR processing is achieved. In addition, because data bit width compression needs to be performed on the WDR video, a part of target feature information is lost. In this embodiment of this application, linear processing may further be performed on two streams of image data with different exposure duration output by the image sensor, to obtain two streams of AI input data. A final target recognition result is obtained, by using the AI algorithm, based on target recognition results of AI input data output after WDR processing and two streams of AI input data output after linear processing. This can ensure that a balance between a bright area and a dark area in an output WDR video is achieved and target information is not lost, and improve AI target recognition accuracy in a wide dynamic range scene.

In a possible implementation, the method further includes: performing second image processing on the third image data, to obtain fourth AI input data; and the performing target recognition based on the first AI input data, the second AI input data, and the third AI input data, and determining the target information includes: performing target recognition based on the first AI input data, the second AI input data, the third AI input data, and the fourth AI input data, and determining the target information.

In this embodiment of this application, WDR processing may be performed on two streams of image data with different exposure duration, so that a balance between a bright area and a dark area in a WDR video obtained after WDR processing is achieved. In addition, because data bit width compression needs to be performed on the WDR video, a part of target feature information is lost. In this embodiment of this application, linear processing may further be performed on three streams of image data with different exposure duration output by the image sensor, to obtain three streams of AI input data. A final target recognition result is obtained, by using the AI algorithm, based on target recognition results of AI input data output after WDR processing and three streams of AI input data output after linear processing. This can ensure that a balance between a bright area and a dark area in an output WDR video is achieved and target information is not lost, and improve AI target recognition accuracy in a wide dynamic range scene.

In a possible implementation, the method further includes: performing second image processing on third image data, to obtain fourth AI input data. The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data. The performing target recognition based on the first AI input data, the second AI input data, and the third AI input data, and determining the target information includes: performing target recognition based on the first AI input data, the second AI input data, the third AI input data, and the fourth AI input data, and determining the target information.

In this embodiment of this application, WDR processing may be performed on three streams of image data with different exposure duration, so that a balance between a bright area and a dark area in a WDR video obtained after WDR processing is achieved. In addition, because data bit width compression needs to be performed on the WDR video, a part of target feature information is lost. In this embodiment of this application, linear processing may further be separately performed on three streams of image data with different exposure duration output by the image sensor, to obtain three streams of AI input data. A final target recognition result is obtained, by using the AI algorithm, based on target recognition results of AI input data output after WDR processing and three streams of AI input data output after linear processing. This can ensure that a balance between a bright area and a dark area in an output WDR video is achieved and target information is not lost, and improve AI target recognition accuracy in a wide dynamic range scene.

In a possible implementation, the method further includes: sending the first AI input data to a display; and/or storing the first AI input data and the second AI input data.

In this embodiment of this application, when two types of image processing are WDR processing and linear processing, the first AI data is AI data output after WDR processing. Therefore, a balance between a bright area and a dark area in an image displayed by the display can be achieved. This can improve image quality and improve viewing experience of a user. In this embodiment of this application, the first AI input data and the second AI input data may further be stored. Therefore, when the display displays the image, a related target in the image is marked, based on the first AI input data and the second AI input data, for the user to view.

In a possible implementation, after the determining the target information, the method further includes: executing a target event based on the target information. The target event includes at least one of the following: displaying the target information in an image displayed by the display, marking, based on the target information, a target object in an image displayed by the display, uploading the target information to a cloud, or generating a notification message based on the target information. The image displayed by the display is an image displayed based on the first AI input data.

In this embodiment of this application, the target event may be executed based on a finally output target recognition result. Target events executed in different application scenarios may be different. For example, when a target recognition result is an unauthorized face, the target event may be sending a notification message to an associated terminal, to notify the user that a thief may have entered the home. For another example, when a target recognition result is a vehicle and a license plate number of the vehicle, the target event may be drawing a box around the vehicle in an image and displaying the license plate number near the box. Different target events may be designed based on different application scenarios for convenience of the user.

In a possible implementation, image data output by the image sensor is image data output for a target scene, the target scene includes a bright area and a dark area, the bright area is an area whose brightness is greater than a first threshold, and the dark area is an area whose brightness is less than a second threshold. The exposure duration corresponding to the first image data is greater than the exposure duration corresponding to the second image data. The performing target recognition based on the first AI input data and the second AI input data, and determining target information includes: obtaining, based on the first AI input data, target information corresponding to the dark area in the target scene; and obtaining, based on the second AI input data, target information corresponding to the bright area in the target scene.

In this embodiment of this application, a target recognition result with a short frame is used for the bright area in the scene, and a target recognition result with a long frame is used for the dark area in the scene. This ensures that the target information in the bright area and the dark area in the wide dynamic range scene is not lost, and improves target recognition accuracy in the wide dynamic range scene.

In a possible implementation, the image data output by the image sensor is image data output for a target scene, the target scene includes a bright area and a dark area, the bright area is an area whose brightness is greater than a first threshold, and the dark area is an area whose brightness is less than a second threshold. The exposure duration corresponding to the first image data is greater than the exposure duration corresponding to the second image data. The performing target recognition based on the first AI input data, the second AI input data, and the third AI input data, and determining the target information includes: obtaining, based on the second AI input data, target information corresponding to the bright area in the target scene; obtaining, based on the third AI input data, target information corresponding to the dark area in the target scene; and obtaining, based on the first AI input data, target information corresponding to another area other than the dark area and the bright area in the target scene.

In this embodiment of this application, when two types of image processing are WDR processing and linear processing, on the basis of a target recognition result corresponding to the first AI input data output after WDR processing, a target recognition result with a short frame is used for the bright area in the scene, and a target recognition result with a long frame is used for the dark area in the scene. This ensures that the target information in the bright area and the dark area in the wide dynamic range scene is not lost, and improves target recognition accuracy in the wide dynamic range scene.

In a possible implementation, the image data output by the image sensor is image data output for a target scene, the target scene includes a bright area, a dark area, and an intermediate area, the bright area is an area whose brightness is greater than a first threshold, the dark area is an area whose brightness is less than a second threshold, the intermediate area is an area whose brightness is greater than a third threshold and less than a fourth threshold, the third threshold is greater than or equal to the second threshold, and the fourth threshold is less than or equal to the first threshold. The exposure duration corresponding to the first image data is greater than the exposure duration corresponding to the third image data, and the exposure duration corresponding to the third image data is greater than the exposure duration corresponding to the second image data. The performing target recognition based on the first AI input data, the second AI input data, the third AI input data, and the fourth AI input data, and determining the target information includes: obtaining, based on the second AI input data, target information corresponding to the bright area in the target scene; obtaining, based on the third AI input data, target information corresponding to the dark area in the target scene; obtaining, based on the fourth AI input data, target information corresponding to the intermediate area in the target scene; and obtaining, based on the first AI input data, target information corresponding to another area other than the bright area, the dark area, and the intermediate area in the target scene.

In this embodiment of this application, when two types of image processing are WDR processing and linear processing, on the basis of a target recognition result corresponding to the first AI input data output after WDR processing, a target recognition result with a short frame is used for the bright area in the scene, a target recognition result with a long frame is used for the dark area in the scene, and a target recognition result with an intermediate frame is used for an area whose brightness is between the brightness of the bright area and the brightness of the dark area. This ensures that the target information in areas with different brightness in the wide dynamic range scene is not lost, and improves target recognition accuracy in the wide dynamic range scene.

In a possible implementation, linear processing includes processing such as interpolation for demosaic, automatic exposure (automatic exposure, AE) control, automatic white balance (automatic white balance, AWB), and color correction performed on raw data output by the image sensor.

In a possible implementation, WDR processing includes WDR blending, tone mapping (tone mapping), and processing such as interpolation for demosaic, automatic exposure (automatic exposure, AE) control, automatic white balance (automatic white balance, AWB), and color correction performed on two or more frames of raw data with different exposure duration output by the image sensor.

According to a second aspect, an embodiment of this application provides a target recognition method, including: performing main image signal processing ISP on raw image data output by an image sensor, to obtain first AI input data; performing auxiliary ISP on the raw image data output by the image sensor, to obtain first AI reference data; and performing target recognition based on the first AI input data and the first AI reference data, and determining target information.

In this embodiment of this application, target recognition may be performed on the two streams of AI input data by using an AI algorithm. A final target recognition result is comprehensively obtained based on a target recognition result of the first AI input data and supplemented by a target recognition result of the first AI reference data. This can improve AI target recognition accuracy in a wide dynamic range scene.

In a possible implementation, both the main ISP and the auxiliary ISP are linear processing.

Exposure duration of the image data processed by using main ISP is different from exposure duration of the image data processed by using auxiliary ISP.

In this embodiment of this application, linear processing may be performed on the two streams of image data with different exposure duration output by the image sensor, to obtain the first AI input data and the first AI reference data. A final target recognition result is comprehensively obtained based on a target recognition result of the first AI input data and supplemented by a target recognition result of the first AI reference data. This can improve AI target recognition accuracy in a wide dynamic range scene.

In a possible implementation, the main ISP is WDR processing, and the auxiliary ISP is linear processing. An input of the main ISP includes first input data and second input data, and the auxiliary ISP includes first auxiliary ISP and second auxiliary ISP. An input of the first auxiliary ISP is the first input data, and an input of the second auxiliary ISP is the second input data.

Exposure duration corresponding to the first input data is different from exposure duration corresponding to the second input data.

In this embodiment of this application, WDR processing and linear processing may be separately performed on two streams of image data output by the image sensor. WDR processing is performed on the two streams of image data, to obtain the first AI input data, and linear processing is separately performed on the two streams of image data, to obtain the first AI reference data and second AI reference data. A final target recognition result is comprehensively obtained based on a target recognition result of the first AI input data and supplemented by a target recognition result of the first AI reference data and a target recognition result of the second AI reference data. This can improve AI target recognition accuracy in a wide dynamic range scene.

In a possible implementation, the main ISP is WDR processing, and the auxiliary ISP is linear processing. An input of the main ISP includes first input data and second input data, and the auxiliary ISP includes first auxiliary ISP, second auxiliary ISP, and third auxiliary ISP. An input of the first auxiliary ISP is the first input data, an input of the second auxiliary ISP is the second input data, and an input of the third auxiliary ISP is third input data.

In this embodiment of this application, WDR processing and linear processing may be separately performed on three streams of image data output by the image sensor. WDR processing is performed on the two streams of image data, to obtain the first AI input data, and linear processing is separately performed on the three streams of image data, to obtain the first AI reference data, second AI reference data, and third AI reference data. A final target recognition result is comprehensively obtained based on a target recognition result of the first AI input data and supplemented by a target recognition result of the first AI reference data, a target recognition result of the second AI reference data, and a target recognition result of the third AI reference data. This can improve AI target recognition accuracy in a wide dynamic range scene.

In a possible implementation, the main ISP is WDR processing, and the auxiliary ISP is linear processing. An input of the main ISP includes first input data, second input data, and third input data, and the auxiliary ISP includes first auxiliary ISP and second auxiliary ISP. An input of the first auxiliary ISP is the first input data, and an input of the second auxiliary ISP is the second input data.

In this embodiment of this application, WDR processing and linear processing may be separately performed on three streams of image data output by the image sensor. WDR processing is performed on the three streams of image data, to obtain the first AI input data, and linear processing is separately performed on the two streams of image data, to obtain the first AI reference data and second AI reference data. A final target recognition result is comprehensively obtained based on a target recognition result of the first AI input data and supplemented by a target recognition result of the first AI reference data and a target recognition result of the second AI reference data. This can improve AI target recognition accuracy in a wide dynamic range scene.

In a possible implementation, linear processing includes processing such as interpolation for demosaic, automatic exposure (automatic exposure, AE) control, automatic white balance (automatic white balance, AWB), and color correction performed on raw data output by the image sensor.

In a possible implementation, WDR processing includes WDR blending, tone mapping (tone mapping), and processing such as interpolation for demosaic, automatic exposure (automatic exposure, AE) control, automatic white balance (automatic white balance, AWB), and color correction performed on two or more frames of raw data with different exposure duration output by the image sensor.

According to a third aspect, an embodiment of this application provides a target recognition apparatus, including: a first image processing module, configured to perform first image processing on first image data, to obtain first artificial intelligence AI input data; a second image processing module, configured to perform second image processing on second image data, to obtain second AI input data, where exposure duration corresponding to the first AI input data is different from exposure duration corresponding to the second AI input data, or a dynamic range corresponding to the first AI input data is different from a dynamic range corresponding to the second AI input data, and both the first image data and the second image data are raw image data generated by an image sensor; and an AI recognition module, configured to perform target recognition based on the first AI input data and the second AI input data, and determine target information.

In a possible implementation, both the first image processing and the second image processing are linear processing, image content corresponding to the first image data is the same as image content corresponding to the second image data, and exposure duration corresponding to the first image data is different from exposure duration corresponding to the second image data.

In a possible implementation, image data output by the image sensor is one stream of image data, and the apparatus further includes a splitting module, configured to split the image data output by the image sensor, to obtain the first image data and the second image data.

In a possible implementation, the first image processing is wide dynamic range WDR processing, the second image processing is linear processing, image content corresponding to the first image data is the same as image content corresponding to the second image data, and exposure duration corresponding to the first image data is different from exposure duration corresponding to the second image data. The first image processing module is specifically configured to perform first image processing based on the first image data and the second image data, to obtain the first AI input data. The apparatus further includes a third image processing module, configured to perform second image processing on the first image data, to obtain third AI input data. The AI recognition module is specifically configured to perform target recognition based on the first AI input data, the second AI input data, and the third AI input data, and determine the target information.

In a possible implementation, the first image processing module is specifically configured to perform first image processing based on the first image data, the second image data, and third image data, to obtain the first AI input data. The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data.

In a possible implementation, the apparatus further includes a fourth image processing module, configured to perform second image processing on the third image data, to obtain fourth AI input data. The AI recognition module is specifically configured to perform target recognition based on the first AI input data, the second AI input data, the third AI input data, and the fourth AI input data, and determine the target information.

In a possible implementation, the apparatus further includes a fourth image processing module, configured to perform second image processing on third image data, to obtain fourth AI input data. The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data. The AI recognition module is specifically configured to perform target recognition based on the first AI input data, the second AI input data, the third AI input data, and the fourth AI input data, and determine the target information.

In a possible implementation, the apparatus further includes a transmission display module, configured to send the first AI input data to a display; and/or a storage module, configured to store the first AI input data and the second AI input data.

In a possible implementation, the apparatus further includes an execution module, configured to execute a target event based on the target information. The target event includes at least one of the following: displaying the target information in an image displayed by the display, marking, based on the target information, a target object in an image displayed by the display, uploading the target information to a cloud, or generating a notification message based on the target information. The image displayed by the display is an image displayed based on the first AI input data.

In a possible implementation, when the target event is displaying the target information in the image displayed by the display or marking, based on the target information, the target object in the image displayed by the display, the execution module is the display.

In a possible implementation, when the target event is uploading the target information to the cloud or generating the notification message based on the target information, the execution module is a communication module or a transmission module.

In a possible implementation, image data output by the image sensor is image data output for a target scene, the target scene includes a bright area and a dark area, the bright area is an area whose brightness is greater than a first threshold, and the dark area is an area whose brightness is less than a second threshold. The exposure duration corresponding to the first image data is greater than the exposure duration corresponding to the second image data. The AI recognition module is specifically configured to: obtain, based on the first AI input data, target information corresponding to the dark area in the target scene; and obtain, based on the second AI input data, target information corresponding to the bright area in the target scene.

In a possible implementation, the image data output by the image sensor is image data output for a target scene, the target scene includes a bright area and a dark area, the bright area is an area whose brightness is greater than a first threshold, and the dark area is an area whose brightness is less than a second threshold. The exposure duration corresponding to the first image data is greater than the exposure duration corresponding to the second image data. The AI recognition module is specifically configured to: obtain, based on the second AI input data, target information corresponding to the bright area in the target scene; obtain, based on the third AI input data, target information corresponding to the dark area in the target scene; and obtain, based on the first AI input data, target information corresponding to another area other than the dark area and the bright area in the target scene.

In a possible implementation, the image data output by the image sensor is image data output for a target scene, the target scene includes a bright area, a dark area, and an intermediate area, the bright area is an area whose brightness is greater than a first threshold, the dark area is an area whose brightness is less than a second threshold, the intermediate area is an area whose brightness is greater than a third threshold and less than a fourth threshold, the third threshold is greater than or equal to the second threshold, and the fourth threshold is less than or equal to the first threshold. The exposure duration corresponding to the first image data is greater than the exposure duration corresponding to the third image data, and the exposure duration corresponding to the third image data is greater than the exposure duration corresponding to the second image data. The AI recognition module is specifically configured to: obtain, based on the second AI input data, target information corresponding to the bright area in the target scene; obtain, based on the third AI input data, target information corresponding to the dark area in the target scene; obtain, based on the fourth AI input data, target information corresponding to the intermediate area in the target scene; and obtain, based on the first AI input data, target information corresponding to another area other than the bright area, the dark area, and the intermediate area in the target scene.

In a possible implementation, linear processing includes processing such as interpolation for demosaic, automatic exposure (automatic exposure, AE) control, automatic white balance (automatic white balance, AWB), and color correction performed on raw data output by the image sensor.

In a possible implementation, WDR processing includes WDR blending, tone mapping (tone mapping), and processing such as interpolation for demosaic, automatic exposure (automatic exposure, AE) control, automatic white balance (automatic white balance, AWB), and color correction performed on two or more frames of raw data with different exposure duration output by the image sensor.

According to a fourth aspect, an embodiment of this application provides a target recognition apparatus, including: a main image signal processing ISP module, configured to process raw image data output by an image sensor, to obtain first AI input data; an auxiliary ISP module, configured to process the raw image data output by the image sensor, to obtain first AI reference data; and a target recognition module, configured to perform target recognition based on the first AI input data and the first AI reference data, and determine target information.

In a possible implementation, both main ISP and auxiliary ISP are linear processing.

In a possible implementation, the main ISP is WDR processing, and the auxiliary ISP is linear processing. An input of the main ISP module includes first input data and second input data, and the auxiliary ISP module includes a first auxiliary ISP unit and a second auxiliary ISP unit. An input of the first auxiliary ISP unit is the first input data, and an input of the second auxiliary ISP unit is the second input data.

In a possible implementation, the main ISP is WDR processing, and the auxiliary ISP is linear processing. An input of the main ISP module includes first input data and second input data, and the auxiliary ISP module includes a first auxiliary ISP unit, a second auxiliary ISP unit, and a third auxiliary ISP unit. An input of the first auxiliary ISP unit is the first input data, an input of the second auxiliary ISP unit is the second input data, and an input of the third auxiliary ISP unit is third input data.

In a possible implementation, the main ISP is WDR processing, and the auxiliary ISP is linear processing. An input of the main ISP module includes first input data, second input data, and third input data, and the auxiliary ISP module includes a first auxiliary ISP unit and a second auxiliary ISP unit. An input of the first auxiliary ISP unit is the first input data, and an input of the second auxiliary ISP unit is the second input data.

In a possible implementation, linear processing includes processing such as interpolation for demosaic, automatic exposure (automatic exposure, AE) control, automatic white balance (automatic white balance, AWB), and color correction performed on raw data output by the image sensor.

In a possible implementation, WDR processing includes WDR blending, tone mapping (tone mapping), and processing such as interpolation for demosaic, automatic exposure (automatic exposure, AE) control, automatic white balance (automatic white balance, AWB), and color correction performed on two or more frames of raw data with different exposure duration output by the image sensor.

According to a fifth aspect, an embodiment of this application provides a target recognition apparatus, including a processor and a transmission interface. The processor is configured to invoke software instructions stored in a memory, to perform first image processing on first image data, to obtain first artificial intelligence AI input data; perform second image processing on second image data, to obtain second AI input data, where exposure duration corresponding to the first AI input data is different from exposure duration corresponding to the second AI input data, or a dynamic range corresponding to the first AI input data is different from a dynamic range corresponding to the second AI input data, and both the first image data and the second image data are raw image data generated by an image sensor; and perform target recognition based on the first AI input data and the second AI input data, and determine target information.

In a possible implementation, both the first image processing and the second image processing are linear processing, image content corresponding to the first image data is the same as image content corresponding to the second image data, and exposure duration corresponding to the first image data is different from exposure duration corresponding to the second image data.

In a possible implementation, image data output by the image sensor is one stream of image data. Before performing first image processing on the first image data, the processor is further configured to split the image data output by the image sensor, to obtain the first image data and the second image data.

In a possible implementation, the first image processing is wide dynamic range WDR processing, the second image processing is linear processing, image content corresponding to the first image data is the same as image content corresponding to the second image data, and exposure duration corresponding to the first image data is different from exposure duration corresponding to the second image data. When performing first image processing on the first image data, to obtain the first AI input data, the processor specifically performs first image processing based on the first image data and the second image data, to obtain the first AI input data. The processor further performs second image processing on the first image data, to obtain third AI input data. When performing target recognition based on the first AI input data and the second AI input data, and determining the target information, the processor specifically performs target recognition based on the first AI input data, the second AI input data, and the third AI input data, and determines the target information.

In a possible implementation, when performing first image processing based on the first image data and the second image data, to obtain the first AI input data, the processor specifically performs first image processing based on the first image data, the second image data, and third image data, to obtain the first AI input data. The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data.

In a possible implementation, the processor is further configured to perform second image processing on the third image data, to obtain fourth AI input data. When performing target recognition based on the first AI input data, the second AI input data, and the third AI input data, and determining the target information, the processor specifically performs target recognition based on the first AI input data, the second AI input data, the third AI input data, and the fourth AI input data, and determines the target information.

In a possible implementation, the processor is further configured to perform second image processing on third image data, to obtain fourth AI input data. The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data. When performing target recognition based on the first AI input data, the second AI input data, and the third AI input data, and determining the target information, the processor specifically performs target recognition based on the first AI input data, the second AI input data, the third AI input data, and the fourth AI input data, and determines the target information.

In a possible implementation, the processor is further configured to: send the first AI input data to a display; and/or store the first AI input data and the second AI input data.

In a possible implementation, after determining the target information, the processor is further configured to execute a target event based on the target information. The target event includes at least one of the following: displaying the target information in an image displayed by the display, marking, based on the target information, a target object in an image displayed by the display, uploading the target information to a cloud, or generating a notification message based on the target information. The image displayed by the display is an image displayed based on the first AI input data.

In a possible implementation, the target recognition apparatus may further include a display module. When the target event is displaying the target information in the image displayed by the display or marking, based on the target information, the processor executes the target event by using the display module.

In a possible implementation, when the target event is uploading the target information to the cloud or generating the notification message based on the target information, the processor executes the target event through the transmission interface.

In a possible implementation, image data output by the image sensor is image data output for a target scene, the target scene includes a bright area and a dark area, the bright area is an area whose brightness is greater than a first threshold, and the dark area is an area whose brightness is less than a second threshold. The exposure duration corresponding to the first image data is greater than the exposure duration corresponding to the second image data. When performing target recognition based on the first AI input data and the second AI input data, and determining target information, the processor specifically obtains, based on the first AI input data, target information corresponding to the dark area in the target scene; and obtains, based on the second AI input data, target information corresponding to the bright area in the target scene.

In a possible implementation, the image data output by the image sensor is image data output for a target scene, the target scene includes a bright area and a dark area, the bright area is an area whose brightness is greater than a first threshold, and the dark area is an area whose brightness is less than a second threshold. The exposure duration corresponding to the first image data is greater than the exposure duration corresponding to the second image data. When performing target recognition based on the first AI input data, the second AI input data, and the third AI input data, and determining the target information, the processor specifically obtains, based on the second AI input data, target information corresponding to the bright area in the target scene; obtains, based on the third AI input data, target information corresponding to the dark area in the target scene; and obtains, based on the first AI input data, target information corresponding to another area other than the dark area and the bright area in the target scene.

In a possible implementation, the image data output by the image sensor is image data output for a target scene, the target scene includes a bright area, a dark area, and an intermediate area, the bright area is an area whose brightness is greater than a first threshold, the dark area is an area whose brightness is less than a second threshold, the intermediate area is an area whose brightness is greater than a third threshold and less than a fourth threshold, the third threshold is greater than or equal to the second threshold, and the fourth threshold is less than or equal to the first threshold. The exposure duration corresponding to the first image data is greater than the exposure duration corresponding to the third image data, and the exposure duration corresponding to the third image data is greater than the exposure duration corresponding to the second image data. When performing target recognition based on the first AI input data, the second AI input data, the third AI input data, and the fourth AI input data, and determining the target information, the processor specifically obtains, based on the second AI input data, target information corresponding to the bright area in the target scene; obtains, based on the third AI input data, target information corresponding to the dark area in the target scene; obtains, based on the fourth AI input data, target information corresponding to the intermediate area in the target scene; and obtains, based on the first AI input data, target information corresponding to another area other than the bright area, the dark area, and the intermediate area in the target scene.

In a possible implementation, linear processing includes processing such as interpolation for demosaic, automatic exposure (automatic exposure, AE) control, automatic white balance (automatic white balance, AWB), and color correction performed on raw data output by the image sensor.

In a possible implementation, WDR processing includes WDR blending, tone mapping (tone mapping), and processing such as interpolation for demosaic, automatic exposure (automatic exposure, AE) control, automatic white balance (automatic white balance, AWB), and color correction performed on two or more frames of raw data with different exposure duration output by the image sensor.

According to a sixth aspect, an embodiment of this application provides a target recognition apparatus, including: a main image signal processor ISP, an auxiliary ISP, and an AI recognition circuit. The main ISP processes raw image data output by an image sensor, to obtain first AI input data. The auxiliary ISP processes the raw image data output by the image sensor, to obtain first AI reference data. The AI recognition circuit performs target recognition based on the first AI input data and the first AI reference data, and determines target information.

In a possible implementation, both the main ISP and the auxiliary ISP perform linear processing on the raw image data output by the image sensor.

In a possible implementation, an input of the main ISP includes first input data and second input data, and the main ISP performs WDR processing on the first input data and the second input data that are output by the image sensor, to obtain the first AI input data. The auxiliary ISP includes a first auxiliary ISP and a second auxiliary ISP. The first auxiliary ISP performs linear processing on the first input data, to obtain the first AI reference data. The second auxiliary ISP performs linear processing on the second input data, to obtain second AI reference data.

In a possible implementation, main ISP is WDR processing, and auxiliary ISP is linear processing. The main ISP performs WDR processing on first input data and second input data that are output by the image sensor, to obtain the first AI input data. The auxiliary ISP includes a first auxiliary ISP, a second auxiliary ISP, and a third auxiliary ISP. The first auxiliary ISP processes the first input data, to obtain the first AI reference data. The second auxiliary ISP processes the second input data, to obtain second AI reference data. The third auxiliary ISP processes third input data, to obtain third AI reference data.

In a possible implementation, main ISP is WDR processing, and auxiliary ISP is linear processing. The main ISP processes first input data, second input data, and third input data that are output by the image sensor, to obtain the first AI input data. The auxiliary ISP includes a first auxiliary ISP and a second auxiliary ISP. The first auxiliary ISP processes the first input data, to obtain the first AI reference data. The second auxiliary ISP processes the second input data, to obtain second AI reference data.

In a possible implementation, linear processing includes processing such as interpolation for demosaic, automatic exposure (automatic exposure, AE) control, automatic white balance (automatic white balance, AWB), and color correction performed on raw data output by the image sensor.

In a possible implementation, WDR processing includes WDR blending, tone mapping (tone mapping), and processing such as interpolation for demosaic, automatic exposure (automatic exposure, AE) control, automatic white balance (automatic white balance, AWB), and color correction performed on two or more frames of raw data with different exposure duration output by the image sensor.

According to a seventh aspect, an embodiment of this application provides a computer-readable storage medium. The computer-readable storage medium stores instructions, and when the instructions are run on a computer or a processor, the computer or the processor performs the target recognition method provided in any one of the first aspect or the possible implementations of the first aspect in embodiments of this application.

According to an eighth aspect, an embodiment of this application provides a computer-readable storage medium. The computer-readable storage medium stores instructions, and when the instructions are run on a computer or a processor, the computer or the processor performs the target recognition method provided in any one of the second aspect or the possible implementations of the second aspect in embodiments of this application.

According to a ninth aspect, an embodiment of this application provides a computer program product including instructions. When the computer program product is run on a computer or a processor, the computer or the processor performs the target recognition method provided in any one of the first aspect or the possible implementations of the first aspect in embodiments of this application.

According to a tenth aspect, an embodiment of this application provides a computer program product including instructions. When the computer program product is run on a computer or a processor, the computer or the processor performs the target recognition method provided in any one of the second aspect or the possible implementations of the second aspect in embodiments of this application.

It may be understood that the target recognition apparatus provided in the third aspect, the target recognition apparatus provided in the fifth aspect, the computer storage medium provided in the seventh aspect, and the computer program product provided in the ninth aspect are all configured to perform the target recognition method provided in the first aspect. Therefore, for beneficial effects, refer to beneficial effects in the target recognition method provided in the first aspect. Details are not described herein again.

It may be understood that the target recognition apparatus provided in the fourth aspect, the target recognition apparatus provided in the sixth aspect, the computer storage medium provided in the eighth aspect, and the computer program product provided in the tenth aspect are all configured to perform the target recognition method provided in the second aspect. Therefore, for beneficial effects, refer to beneficial effects in the target recognition method provided in the second aspect. Details are not described herein again.

### BRIEF DESCRIPTION OF DRAWINGS

FIG. 1 is a schematic diagram of an example of a structure of a target recognition system according to an embodiment of this application;
FIG. 2 is a schematic diagram of an example of a structure of a target recognition apparatus according to an embodiment of this application;
FIG. 3 is a schematic flowchart of an example of linear processing according to an embodiment of this application;
FIG. 4 is a schematic flowchart of an example of WDR processing according to an embodiment of this application;
FIG. 5 is a schematic flowchart of an example of a target method according to an embodiment of this application;
FIG. 6 is a schematic diagram of an example of a target recognition frame according to an embodiment of this application;
FIG. 7 is a schematic diagram of another example of a target recognition frame according to an embodiment of this application;
FIG. 8 is a schematic diagram of another example of a target recognition frame according to an embodiment of this application;
FIG. 9 is a schematic diagram of another example of a target recognition frame according to an embodiment of this application;
FIG. 10 is a schematic diagram of another example of a target recognition frame according to an embodiment of this application;
FIG. 11 is a schematic diagram of another example of a target recognition frame according to an embodiment of this application;
FIG. 12 is a schematic diagram of another example of a structure of a target recognition apparatus according to an embodiment of this application; and
FIG. 13 is a schematic diagram of another example of a structure of a target recognition apparatus according to an embodiment of this application.

### DESCRIPTION OF EMBODIMENTS

The following describes embodiments of this application with reference to the accompanying drawings in embodiments of this application.

In embodiments of this application, target recognition may be performed on two streams of AI input data by using an AI algorithm. A final target recognition result is obtained based on a target recognition result of one stream of AI input data and supplemented by a target recognition result of the other stream of AI input data. This can improve AI target recognition accuracy in a wide dynamic range scene.

A wide dynamic range scene mentioned in embodiments of this application may include a WDR scene and an HDR scene. The following is described by using a WDR scene as an example.

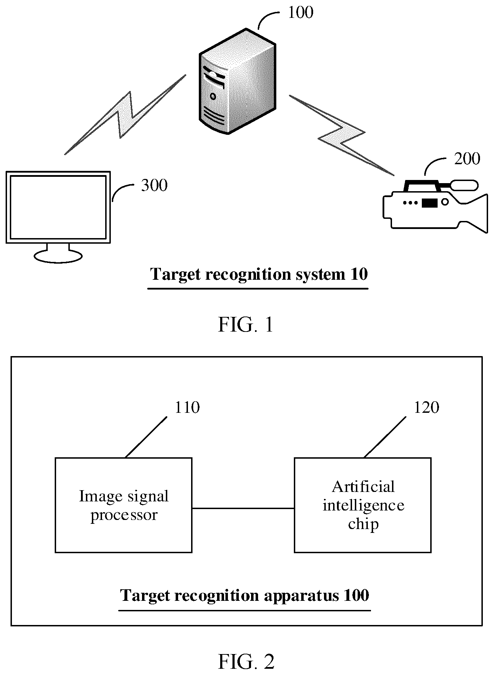

FIG. 1 is a schematic diagram of a structure of a target recognition system according to an embodiment of this application. As shown in FIG. 1, a target recognition system 10 may include a target recognition apparatus 100, an image photographing apparatus 200, and a user terminal 300. The target recognition apparatus 100 is connected to the image photographing apparatus 200, and is configured to receive image data obtained by the image photographing apparatus 200. The target recognition apparatus 100 is configured to analyze the image data obtained by the image photographing apparatus 200, and output target information. The user terminal 300 may be connected to the target recognition apparatus 100, and is configured to receive and display a video frame image output by the target recognition apparatus 100. The user terminal 300 may further be configured to receive a target recognition result output by the target recognition apparatus 100, or configured to receive a prompt message, for example, a notification message or a vibration message, generated based on the target recognition result.

In this embodiment of this application, the image photographing apparatus 200 may be a device with a photographing function, for example, a camera or a camera. An image sensor (image sensor, IS) may be installed in the image photographing apparatus 200. The target recognition apparatus 100 may be configured to receive data output after being exposed by the IS. The data may be raw data (raw data) output by the IS or other processed data (for example, YUV data). In embodiments of this application, the following is described by using an example in which the target recognition apparatus 100 receives the raw data output by the IS. The image photographing apparatus 200 may be usually installed at each intersection, near a house, indoors, or the like. The target recognition apparatus 200 may be a device with an image processing function and a target recognition function. A structure of the target recognition apparatus 200 is described in FIG. 2, and details are not described herein.

In this embodiment of this application, the target recognition apparatus 100 may be connected to the image photographing apparatus 200 by using a data cable or in a wireless manner. A wireless connection manner may be, for example, Bluetooth, wireless fidelity (wireless fidelity, Wi-Fi), or a cellular mobile network.

In a possible implementation, the target recognition apparatus 100 and the image photographing apparatus 200 may alternatively be integrated into one device. In other words, the device has an image collection function, an image processing function, and a target recognition function.

In this embodiment of this application, the target recognition apparatus 100 may be connected to the user terminal 300 by using a data cable or in a wireless manner. A wireless connection manner may be, for example, Bluetooth, Wi-Fi, or a cellular mobile network.

In a possible implementation, the target recognition apparatus 100 may alternatively be integrated into the user terminal 300. In other words, the user terminal 300 further has an image processing function and a target recognition function.

For example, the target recognition system 10 provided in this embodiment of this application may be used for traffic monitoring. The image photographing apparatus 200 in the system may be a camera installed at each intersection. The target recognition apparatus 100 may be a corresponding server deployed by the traffic management bureau. The user terminal 300 may be a display deployed by the traffic management bureau, and is configured to view a traffic flow condition at an intersection. Alternatively, the user terminal 300 may be a terminal registered in a traffic management system. When the target recognition apparatus 100 recognizes that a vehicle violates a traffic rule at an intersection, the target recognition apparatus 100 may send a notification message to the user terminal 300 associated with the vehicle, to notify a vehicle owner to deal with the violation in time.

For example, the target recognition system 10 provided in this embodiment of this application may be used for home security monitoring. In other words, the image photographing apparatus 200 in the system may be a camera installed at home. The target recognition apparatus 100 is integrated into the user terminal 300. In this case, the target recognition apparatus 100 may be an image processing chip in the user terminal 300. The user terminal 300 may be a mobile phone, a computer, or the like of a householder. When the target recognition apparatus 100 outputs a target recognition result and determines, based on the target recognition result, that an unauthorized face exists in a photographed image, the user terminal 300 may warn the householder, by generating a notification message, flashing a currently displayed photographed image, or generating a vibration prompt, that a stranger may intrude the house.

Determining, based on the target recognition result, that an unauthorized face exists in a photographed image is not limited to be performed by the target recognition apparatus 100. During specific implementation, the user terminal 300 may alternatively determine, based on the target recognition result output by the target recognition apparatus 100, that an unauthorized face exists in the photographed image. This is not limited in this embodiment of this application.

It should be understood that the user terminal may be a display apparatus with a display function. Based on such an understanding, the target recognition apparatus, the image photographing apparatus, and the display apparatus may be integrated into a same apparatus. For example, the integrated apparatus is an intelligent monitoring terminal, the target recognition apparatus is a chip of a processor in the intelligent monitoring terminal, the image photographing apparatus is a camera of the intelligent monitoring terminal, and the display apparatus is a display of the intelligent monitoring terminal.

With reference to the target recognition system described in FIG. 1, the following describes a target recognition apparatus provided in an embodiment of this application. FIG. 2 is a schematic diagram of an example of a structure of a target recognition apparatus.

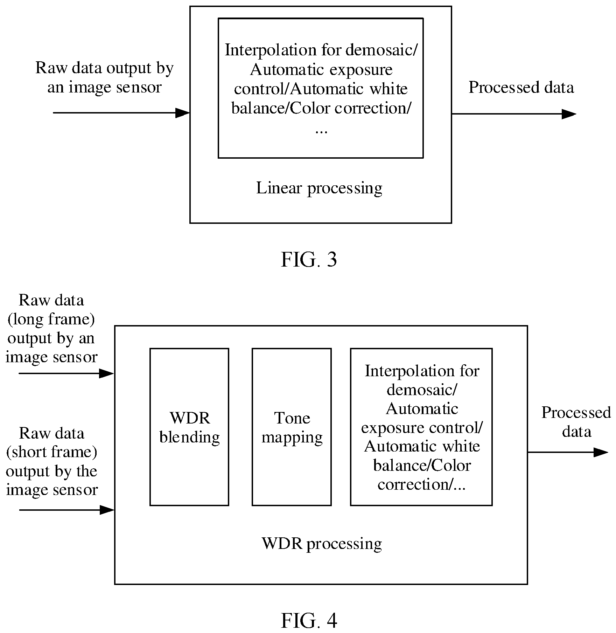

As shown in FIG. 2, a target recognition apparatus 100 may include an image signal processor (image signal processor, ISP) 110 and an artificial intelligence (artificial intelligence, AI) chip 120. The ISP 110 is configured to receive raw data (raw data) output after being exposed by an image sensor (image sensor, IS) in an image photographing apparatus, and process the raw data. The ISP processes the raw data in two manners: linear processing and WDR processing. In this application, the two processing manners are separately described in FIG. 3 and FIG. 4, and details are not described herein. The AI chip 120 includes an AI recognition algorithm, used to perform target recognition on data processed by the ISP 110, and output target information. In a possible implementation, the AI chip 120 may alternatively be integrated with the ISP 110, for example, may be integrated into a system-on-chip (system-on-chip, SoC) chip.

The following separately describes linear processing and WDR processing in embodiments of this application.

Specifically, linear processing means that single-exposure raw data is processed by an ISP, to obtain linear image data. WDR processing means that several frames of raw data with different exposure duration are processed by an ISP, to obtain WDR image data. WDR processing may further include frame WDR processing and row WDR processing. For frame WDR processing, a common image sensor may be used to perform exposure for a plurality of times and send data to the ISP for processing. For row WDR processing, a WDR sensor may be used to perform exposure for a plurality of times and send data to the ISP for processing. The common image sensor performs exposure for one time and outputs one frame of raw data, and the WDR sensor performs exposure for a plurality of times and outputs a group of raw data. The group of raw data may include a plurality of frames of raw data with different exposure duration.

FIG. 3 is a schematic flowchart of an example of linear processing. As shown in FIG. 3, linear processing may be that the ISP performs processing such as interpolation for demosaic, automatic exposure (automatic exposure, AE) control, automatic white balance (automatic white balance, AWB), and color correction on raw data output by the image sensor, and outputs processed data. The processed data may be image data in an RGB format or a YUV format. Linear processing is not limited to the foregoing processing manners in FIG. 3. During specific implementation, linear processing may further include processing such as gamma correction performed on the raw data. Specific content of linear processing is not limited in this embodiment of this application.

FIG. 4 is a schematic flowchart of an example of WDR processing. As shown in FIG. 4, WDR processing may be performing WDR blending, tone mapping (tone mapping), and processing such as interpolation for demosaic, automatic exposure (automatic exposure, AE) control, automatic white balance (automatic white balance, AWB), and color correction performed on two frames (a long frame and a short frame) of raw data with different exposure duration output by the image sensor, and outputs processed data.

Raw data is not limited to the two frames of raw data in FIG. 4. During specific implementation, WDR processing may further be performed on three or more frames of raw data. This is not limited in this embodiment of this application. In embodiments of this application, WDR processing may be referred to as N-in-one WDR processing. N indicates a quantity of frames of input data on which WDR processing is performed. For example, performing WDR processing on two frames of raw data may be referred to as two-in-one WDR processing. Performing WDR processing on three frames of raw data may be referred to as three-in-one WDR processing.

WDR processing is not limited to processing such as automatic exposure (automatic exposure, AE) control, automatic white balance (automatic white balance, AWB), and color correction shown in FIG. 4. During specific implementation, interpolation for demosaic and gamma correction may further be performed. This is not limited in this embodiment of this application.

Processing sequence is not limited to a sequence in FIG. 4. During specific implementation, processing such as automatic exposure (automatic exposure, AE) control, automatic white balance (automatic white balance, AWB), and color correction may first be performed on each frame of raw data, WDR blending is performed on processing results of frames, and then tone mapping is performed. This is not limited in this embodiment of this application.

It can be learned that WDR processing and linear processing may be implemented by different image signal processors, or by a same image signal processor in a time division multiplexing manner. When the same image signal processor is used for implementation in a time division manner, the image signal processor needs to support linear processing and WDR processing, and the two processing modes are configured as a linear processing mode or a WDR processing mode by using software in a time division manner.

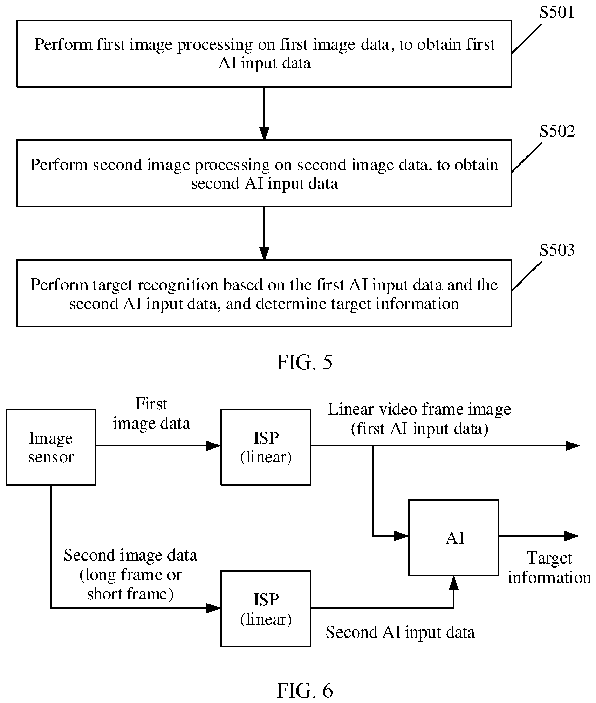

FIG. 5 shows a target recognition method according to an embodiment of this application. The method may be performed by a target recognition apparatus. The method includes but is not limited to the following steps.

S501: Perform first image processing on first image data, to obtain first AI input data.

Specifically, the first image data is raw image data generated by an image sensor. The first image processing may be linear processing or WDR processing. If the first image processing is linear processing, the first AI input data may be linear data. A linear video frame image may be generated based on the linear data and be displayed to a user. If the first image processing is WDR processing, the first AI input data may be WDR data. A WDR video frame image may be generated based on the WDR data and be displayed to a user.

S502: Perform second image processing on second image data, to obtain second AI input data.

Specifically, the second image data is raw image data generated by the image sensor. The second image processing may be linear processing. Exposure duration corresponding to the first AI input data is different from exposure duration corresponding to the second AI input data, or a dynamic range corresponding to the first AI input data is different from a dynamic range corresponding to the second AI input data. Dynamic ranges being different means that one of the first AI input data and the second AI input data is linear data, and the other is WDR data.

S503: Perform target recognition based on the first AI input data and the second AI input data, and determine target information.

For example, a final target recognition result may be comprehensively obtained based on a target recognition result of the first AI input data and supplemented by a target recognition result of the second AI input data.

The following describes some implementations in this embodiment of this application.

### Implementation 1: two linear processing

As shown in FIG. 6, an ISP may perform linear processing, in a linear processing mode, on the first image data output by the image sensor, to obtain the first AI input data. In addition, the ISP may further perform linear processing on the second image data, to obtain the second AI input data. Exposure duration of the first image data is different from exposure duration of the second image data. If the exposure duration of the first image data is greater than the exposure duration of the second image data, for the first image data, the second image data is a short frame. If the exposure duration of the first image data is less than the exposure duration of the second image data, for the first image data, the second image data is a long frame.

Specifically, both the first image data and the second image data are data output for a target scene. The target scene may include a bright area and a dark area. The bright area is an area whose brightness is greater than a first threshold. The dark area is an area whose brightness is less than a second threshold. For example, the first threshold may be but is not limited to 90% of maximum brightness of the target scene, and the second threshold may be but is not limited to 10% of the maximum brightness of the target scene.

It is assumed that the exposure duration of the first image data is greater than the exposure duration of the second image data, that is, the second image data is a short frame, the final target recognition result may be subject to the recognition result of the first AI input data, and supplemented by the target recognition result of the second AI input data for the bright area in the target scene. In other words, target information of the bright area in the target scene is subject to the target recognition result of the second AI input data, and target information of another area other than the bright area in the target scene is subject to the target recognition result of the first AI input data.

On the contrary, it is assumed that the exposure duration of the first image data is less than the exposure duration of the second image data, that is, the second image data is a long frame, the final target recognition result may be subject to the recognition result of the first AI input data, and supplemented by the target recognition result of the second AI input data for the dark area in the target scene. In other words, target information of the dark area in the target scene is subject to the target recognition result of the second AI input data, and target information of another area other than the dark area in the target scene is subject to the target recognition result of the first AI input data.

In this embodiment of this application, linear processing performed on the first image data in FIG. 6 may be referred to as main image signal processing, and the target recognition result is subject to the generated first AI input data. Linear processing performed on the second image data is referred to as auxiliary image signal processing, and the generated second AI input data may be referred to as AI reference data. The final target recognition result is output based on the target recognition result of the first AI input data and supplemented by the target recognition result of the AI reference data.

### Implementation 2: two-in-one WDR processing and two linear processing

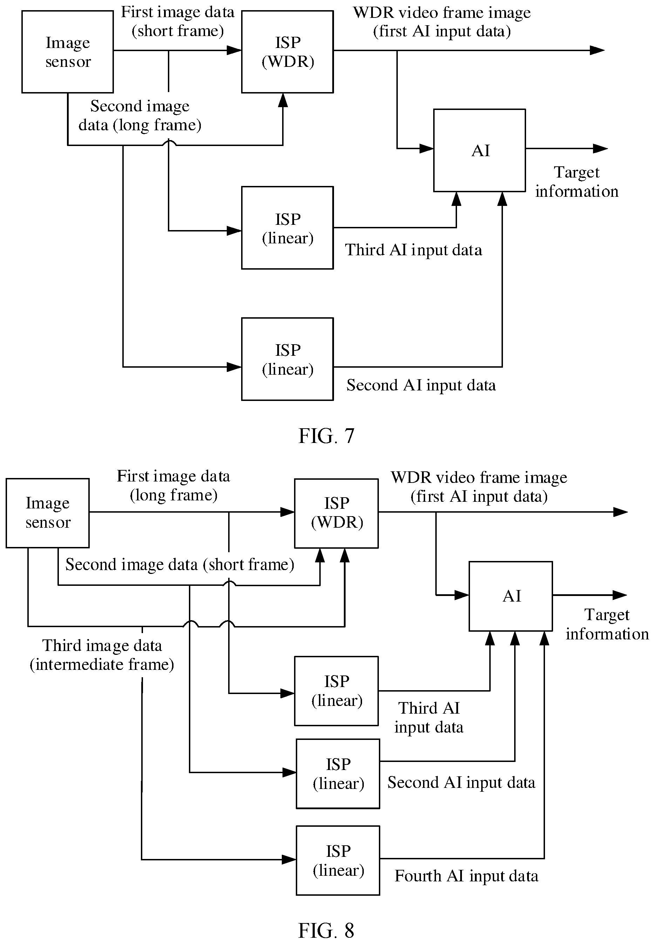

As shown in FIG. 7, the ISP may perform WDR processing, in a WDR processing mode, on the first image data and the second image data that are output by the image sensor, to obtain the first AI input data. In addition, the ISP may perform linear processing, in a linear processing mode, on the first image data, to obtain third AI input data. The ISP may perform linear processing, in the linear processing mode, on the second image data, to obtain the second AI input data. Exposure duration of the first image data is different from exposure duration of the second image data. If the exposure duration of the first image data is greater than the exposure duration of the second image data, the first image data is a long frame, and the second image data is a short frame. If the exposure duration of the first image data is less than the exposure duration of the second image data, the first image data is a short frame, and the second image data is a long frame. In FIG. 7, an example in which the first image data is a short frame and the second image data is a long frame is used for description.

Specifically, both the first image data and the second image data are data output for a target scene. The target scene may include a bright area and a dark area. The bright area is an area whose brightness is greater than a first threshold. The dark area is an area whose brightness is less than a second threshold. For example, the first threshold may be but is not limited to 90% of maximum brightness of the target scene, and the second threshold may be but is not limited to 10% of the maximum brightness of the target scene.

When the first image data is a short frame, and the second image data is a long frame, the final target recognition result may be subject to the recognition result of the first AI input data, and supplemented by the target recognition result of the second AI input data for the dark area in the target scene and by a target recognition result of the third AI input data for the bright area in the target scene. In other words, target information of the bright area in the target scene is subject to the target recognition result of the third AI input data, and target information of the dark area in the target scene is subject to the target recognition result of the second AI input data. Target information of another area other than the bright area and the dark area in the target scene is subject to the target recognition result of the first AI input data.

On the contrary, when the first image data is a long frame, and the second image data is a short frame, the final target recognition result may be subject to the recognition result of the first AI input data, and supplemented by the target recognition result of the second AI input data for the bright area in the target scene and by a target recognition result of the third AI input data for the dark area in the target scene. In other words, target information of the bright area in the target scene is subject to the target recognition result of the second AI input data, and target information of the dark area in the target scene is subject to the target recognition result of the third AI input data. Target information of another area other than the bright area and the dark area in the target scene is subject to the target recognition result of the first AI input data.

### Implementation 3: three-in-one WDR processing and three linear processing

As shown in FIG. 8, the ISP may perform WDR processing, in a WDR processing mode, on the first image data, the second image data, and third image data that are output by the image sensor, to obtain the first AI input data. In addition, the ISP may perform linear processing, in a linear processing mode, on the first image data, to obtain third AI input data. The ISP may perform linear processing, in the linear processing mode, on the second image data, to obtain the second AI input data. The ISP may perform linear processing, in the linear processing mode, on the third image data, to obtain the fourth AI input data. Exposure duration of the first image data is different from exposure duration of the second image data and exposure duration of the third image data. The image data with minimum exposure duration is a short frame, the image data with second highest exposure duration is an intermediate frame, and the image data with maximum exposure duration is a long frame. In FIG. 8, an example in which the first image data is a long frame, the second image data is a short frame, and the third image data is an intermediate frame is used for description.

Specifically, the first image data, the second image data, and the third image data are data output for a target scene. The target scene may include a bright area, a dark area, and an intermediate area. The bright area is an area whose brightness is greater than a first threshold. The dark area is an area whose brightness is less than a second threshold. The intermediate area is an area whose brightness is greater than a third threshold and less than a fourth threshold. The third threshold is greater than or equal to the second threshold, and the fourth threshold is less than or equal to the first threshold. For example, the first threshold may be but is not limited to 90% of maximum brightness of the target scene, and the second threshold may be but is not limited to 10% of the maximum brightness of the target scene. For example, the third threshold may be but is not limited to 40% of the maximum brightness of the target scene, and the fourth threshold may be but is not limited to 50% of the maximum brightness of the target scene.

When the first image data is a long frame, the second image data is a short frame, and the third image data is an intermediate frame, the final target recognition result may be subject to a recognition result of the first AI input data, and supplemented by a target recognition result of the third AI input data for the dark area in the target scene, by a target recognition result of the second AI input data for the bright area in the target scene, and by a target recognition result of the fourth AI input data for another area in the target scene. In other words, target information of the dark area in the target scene is subject to the target recognition result of the third AI input data, and target information of the bright area in the target scene is subject to the target recognition result of the second AI input data. Target information of the intermediate area in the target scene is subject to the target recognition result of the fourth AI input data. Target information of another area other than the bright area, the dark area, and the intermediate area in the target scene is subject to the target recognition result of the first AI input data.

In conclusion, the target recognition result of the AI input data that is obtained through linear processing and that corresponds to the short frame may be used as a supplement to the target information of the bright area in the target scene, the target recognition result of the AI input data that is obtained through linear processing and that corresponds to the long frame may be used as a supplement to the target information of the dark area in the target scene, and the target recognition result of the AI input data that is obtained through linear processing and that corresponds to the intermediate frame may be used as a supplement to the target information of the intermediate area in the target scene.

Based on the foregoing descriptions, how to integrate target recognition results when the first image data is a long frame, the second image data is a short frame, and the third image data is an intermediate frame may be deduced, and how to integrate target recognition results when the first image data is an intermediate frame, the second image data is a long frame, and the third image data is a short frame. A relationship between the exposure duration of the first image data, the exposure duration of the second image data, and the exposure duration of the third image data is not limited in this embodiment of this application.

Implementations are not limited to three-in-one WDR processing and three linear processing. In this embodiment of this application, WDR processing may further be performed on more than three frames of image data with different exposure duration, and linear processing is separately performed on the more than three frames of image data with different exposure duration. It can be learned that image data with different exposure duration can make areas with different brightness in the target scene clearly displayed. Therefore, the final target recognition result may be based on the target recognition result of the AI input data obtained through WDR processing, and target information of a clear area corresponding to exposure duration in the target scene may be supplemented by a target recognition result of AI input data that is obtained through linear processing and that is of image data with the exposure duration. In this embodiment of this application, a quantity of frames of image data on which WDR blending is performed is not limited, and a quantity of frames of image data on which linear processing is performed is not limited.

That a quantity of frames of image data obtained through WDR blending is the same as a quantity of frames of image data obtained through linear processing listed in FIG. 6 to FIG. 8 is not limited. During specific implementation, a quantity of frames of image data obtained through WDR blending may be greater than a quantity of frames of image data obtained through linear processing (for example, Implementation 4), or a quantity of frames of image data obtained through WDR blending may be less than a quantity of frames of image data obtained through linear processing (for example, Implementation 5). This is not limited in this embodiment of this application. The following separately describes the two implementations.

### Implementation 4: three-in-one WDR processing and two linear processing

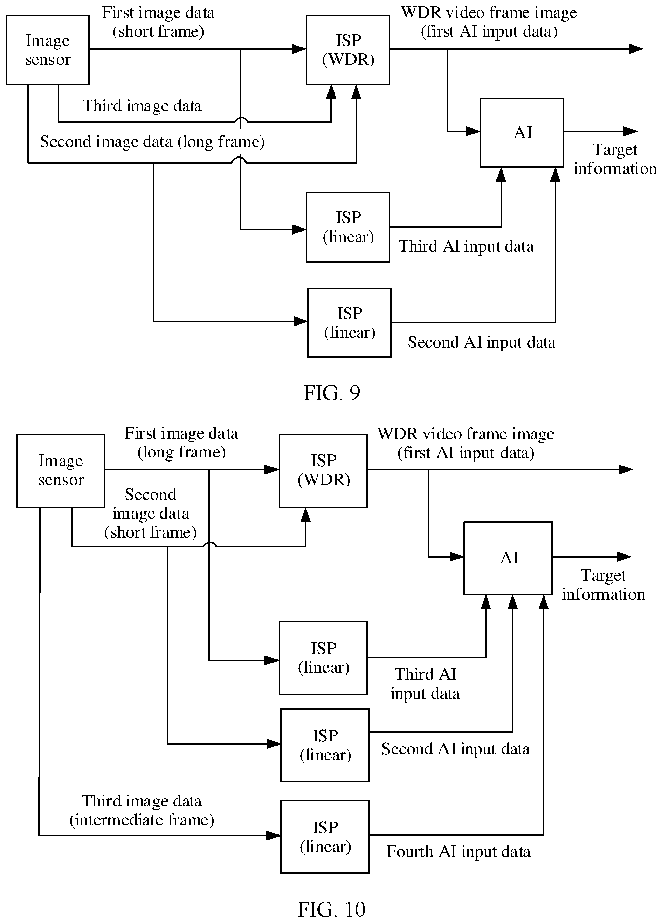

As shown in FIG. 9, the ISP may perform WDR processing, in a WDR processing mode, on the first image data, the second image data, and third image data that are output by the image sensor, to obtain the first AI input data. In addition, the ISP may perform linear processing, in a linear processing mode, on the first image data, to obtain third AI input data. The ISP may perform linear processing, in the linear processing mode, on the second image data, to obtain the second AI input data. Exposure duration of the first image data is different from exposure duration of the second image data. A relationship between exposure duration of the third image data and the exposure duration of the first image data and a relationship between the exposure duration of the third image data and the exposure duration of the second image data are not limited in this embodiment of this application. In FIG. 9, an example in which the first image data is a short frame and the second image data is a long frame is used for description.

Specifically, the first image data, the second image data, and the third image data are data output for a target scene. The target scene may include a bright area and a dark area. The bright area is an area whose brightness is greater than a first threshold. The dark area is an area whose brightness is less than a second threshold. For example, the first threshold may be but is not limited to 90% of maximum brightness of the target scene, and the second threshold may be but is not limited to 10% of the maximum brightness of the target scene.

When the first image data is a short frame, and the second image data is a long frame, the final target recognition result may be subject to a recognition result of the first AI input data, and supplemented by a target recognition result of the second AI input data for the dark area in the target scene and by a target recognition result of the third AI input data for the bright area in the target scene. In other words, target information of the bright area in the target scene is subject to the target recognition result of the third AI input data, and target information of the dark area in the target scene is subject to the target recognition result of the second AI input data. Target information of another area other than the bright area and the dark area in the target scene is subject to the target recognition result of the first AI input data.

On the contrary, when the first image data is a long frame, and the second image data is a short frame, the final target recognition result may be subject to the recognition result of the first AI input data, and supplemented by the target recognition result of the second AI input data for the bright area in the target scene and by a target recognition result of the third AI input data for the dark area in the target scene. In other words, target information of the bright area in the target scene is subject to the target recognition result of the second AI input data, and target information of the dark area in the target scene is subject to the target recognition result of the third AI input data. Target information of another area other than the bright area and the dark area in the target scene is subject to the target recognition result of the first AI input data.

### Implementation 5: two-in-one WDR processing and three linear processing

As shown in FIG. 10, the ISP may perform WDR processing, in a WDR processing mode, on the first image data and the second image data that are output by the image sensor, to obtain the first AI input data. In addition, the ISP may perform linear processing, in a linear processing mode, on the first image data, to obtain third AI input data. The ISP may perform linear processing, in the linear processing mode, on the second image data, to obtain the second AI input data. The ISP may perform linear processing, in the linear processing mode, on third image data, to obtain fourth AI input data. Exposure duration of the first image data is different from exposure duration of the second image data and exposure duration of the third image data. The image data with minimum exposure duration is a short frame, the image data with second highest exposure duration is an intermediate frame, and the image data with maximum exposure duration is a long frame. In FIG. 10, an example in which the first image data is a long frame, the second image data is a short frame, and the third image data is an intermediate frame is used for description.

Specifically, the first image data, the second image data, and the third image data are data output for a target scene. The target scene may include a bright area, a dark area, and an intermediate area. The bright area is an area whose brightness is greater than a first threshold. The dark area is an area whose brightness is less than a second threshold. The intermediate area is an area whose brightness is greater than a third threshold and less than a fourth threshold. The third threshold is greater than or equal to the second threshold, and the fourth threshold is less than or equal to the first threshold. For example, the first threshold may be but is not limited to 90% of maximum brightness of the target scene, and the second threshold may be but is not limited to 10% of the maximum brightness of the target scene. For example, the third threshold may be but is not limited to 40% of the maximum brightness of the target scene, and the fourth threshold may be but is not limited to 50% of the maximum brightness of the target scene.

For integration of target recognition results, refer to related descriptions in Implementation 3. Details are not described herein again.

That there are a plurality of streams of raw data output by the image processor in FIG. 5 to FIG. 10 is not limited. During specific implementation, the image sensor may combine the plurality of streams of raw data and send the plurality of streams of raw data to the ISP, and then the ISP splits the data into a plurality of streams of data. Then, the ISP performs WDR processing in the WDR mode, and the ISP performs linear processing on the plurality of streams of data obtained through splitting in the linear mode. It can be learned that the ISP performing WDR processing and the ISP performing linear processing may be different ISPs, or a same ISP perform processing through time division multiplexing. This is not limited in this embodiment of this application. In this embodiment of this application, an ISP that works in a linear processing mode may be referred to as an ISP (linear), and an ISP that works in a WDR processing mode may be referred to as an ISP (WDR).

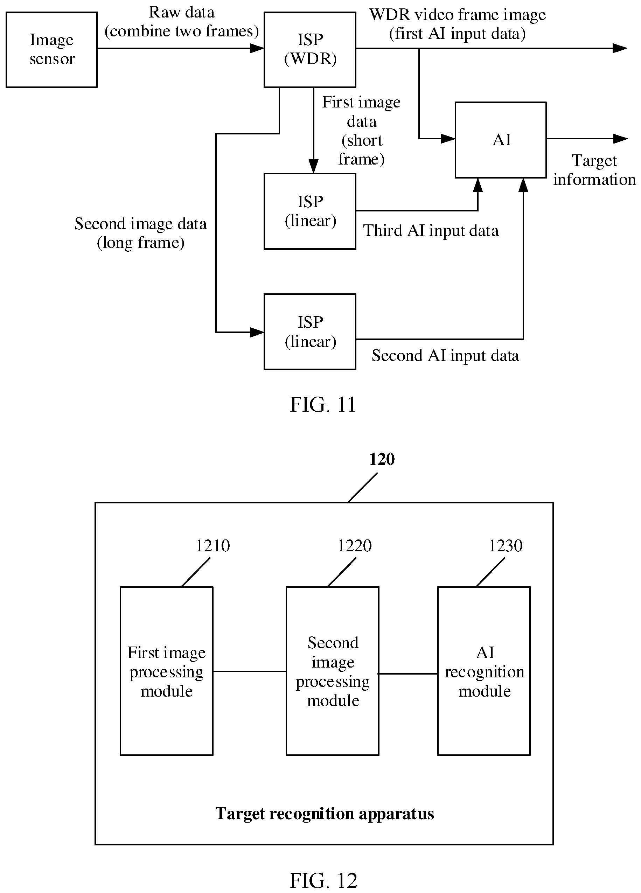

As shown in FIG. 11, the image sensor may output two streams of combined raw data. The ISP (WDR) may split the raw data output by the image sensor, to obtain the first image data and the second image data. The ISP may perform WDR processing, in the WDR processing mode, on the first image data and the second image data, to obtain the first AI input data. In addition, the ISP may perform linear processing, in the linear processing mode, on the first image data, to obtain third AI input data. The ISP may perform linear processing, in the linear processing mode, on the second image data, to obtain the second AI input data. Exposure duration of the first image data is different from exposure duration of the second image data. The image data with minimum exposure duration is a short frame, the image data with second highest exposure duration is an intermediate frame, and the image data with maximum exposure duration is a long frame. In FIG. 11, an example in which the first image data is a short frame and the second image data is a long frame is used for description.

Specifically, both the first image data and the second image data are data output for a target scene. The target scene may include a bright area and a dark area. The bright area is an area whose brightness is greater than a first threshold. The dark area is an area whose brightness is less than a second threshold. For integration of target recognition results, refer to related descriptions in Implementation 2. Details are not described herein again.

Combining and outputting two streams of raw data is not limited. During specific implementation, the image sensor may further combine and output a plurality of streams of raw data. This is not limited in this embodiment of this application.

In this embodiment of this application, WDR processing in FIG. 7 to FIG. 11 may be referred to as main image signal processing, and the target recognition result is subject to the generated first AI input data. Linear processing performed on image data is referred to as auxiliary image signal processing, and the generated AI input data may be referred to as AI reference data. The final target recognition result is output based on the target recognition result of the first AI input data and supplemented by the target recognition result of the AI reference data.

In some possible implementations, the image sensor may output two or more streams of combined raw data. The ISP (WDR) may split the raw data output by the image sensor, to obtain several frames of image data with different exposure duration. The ISP (WDR) may perform WDR processing, in the WDR processing mode, on the several frames of image data with different exposure duration, to obtain the first AI input data. In addition, the ISP (WDR) may send any one of the several frames of image data with different exposure duration to the ISP (linear), and the ISP (linear) may perform linear processing, in the linear mode, on received image data, to obtain the second AI input data. In this case, a dynamic range corresponding to the first AI input data is different from a dynamic range corresponding to the second AI input data, the first AI input data is high dynamic range data, and the second AI input data is linear data.

In some possible implementations, the target recognition method further includes:
S504: Send the first AI input data to a display.

Specifically, the first AI input data may be linear data obtained after linear processing is performed on the first image data in FIG. 6. A linear video frame image may be generated based on the linear data. The first AI input data may alternatively be WDR data obtained after WDR processing is performed on the raw data output by the image sensor in FIG. 7 to FIG. 11. A WDR video frame image may be generated based on the WDR data. The first AI input data is sent to the display, to enable the user to view, by using the display, an image, about the target scene, that is obtained by an image photographing apparatus.

In some possible implementations, the target recognition method further includes:
S505: Store the first AI input data and the second AI input data.

Specifically, the first AI input data and the second AI input data may be stored, to enable the user to view the first AI input data and the second AI input data when needed. Storing the first AI input data and the second AI input data is not limited. In this embodiment of this application, more data, for example, the third AI input data and the fourth AI input data, obtained through linear processing, may further be stored.

In some possible implementations, after S503, the target recognition method further includes:
S506: Execute a target event based on the target information.

In a possible implementation, the target event may be displaying the target information in an image displayed by the display. The image displayed by the display is an image displayed based on the first AI input data. For example, the target information may be a license plate number of a vehicle, and the target event may be displaying the license plate number of the vehicle in the image displayed by the display.

In a possible implementation, the target event may be marking a target object based on the target information in an image displayed by the display. For example, the target information may be a face, and the target event may be marking the face in the image displayed on the display, specifically, drawing a box or a circle around the face. Further, the target information may be a face analysis result obtained after the face is recognized. In other words, the target information may specifically be an age or a gender, and the target event may be displaying an age, a gender, or the like corresponding to a face near the face in the image displayed by the display.

There may be two specific manners of displaying the target information or marking the target object based on the target information in the image displayed by the display: layer overlay, where the video frame image generated based on the first AI input data is overlaid with the image generated based on the target information; and data fusion, where the first AI input data and the data generated based on the target information are fused and sent to the display. This is not limited in this embodiment of this application.

In a possible implementation, the target event may be uploading the target information to a cloud. For example, the target information may be information about a vehicle passing traffic lights. The target event may be uploading a license plate number of each vehicle passing the traffic lights to a server deployed by the traffic management bureau, so that the traffic police can invoke the target information when needed.

In a possible implementation, the target information may be generating a notification message. For example, when the target recognition method is applied to home security protection, the target information may be a face matching result obtained after a face is recognized, that is, the target information may specifically be whether a face matches a pre-authorized face. When the recognized face does not match the pre-authorized face, the target event may be generating a notification message and sending the notification message to an associated user terminal, to notify the user that a stranger may intrude the house.

The target event is not limited to the foregoing listed target events. During specific implementation, the target event may alternatively be flashing an image displayed by the display, generating an alarm by an associated alarm, and the like. The user may preset a target event based on a requirement of the user for different application scenarios. This is not limited in this embodiment of this application.

During implementation of this embodiment of this application, target recognition may be performed on the two streams of AI input data by using the AI algorithm. Different AI input data corresponds to different exposure duration. Target information of areas with different brightness in the target photographing scene may be determined based on AI input data corresponding to different exposure duration, to comprehensively obtain the final target recognition result. For example, target information of a bright area may be obtained based on a short frame with small exposure duration, and target information of a dark area may be obtained based on a long frame with large exposure duration. Therefore, it can be ensured that a bright area and a dark area in a wide dynamic range scene can be clearly displayed at the same time, and AI target recognition accuracy in the wide dynamic range scene can also be ensured.

The method in embodiments of this application is described above in detail, and an apparatus in embodiments of this application is provided below.

FIG. 12 is a schematic diagram of a structure of a target recognition apparatus according to an embodiment of this application. The target recognition apparatus 120 may include a first image processing module 1210, a second image processing module 1220, and an AI recognition module 1230.

The first image processing module 1210 is configured to perform first image processing on first image data, to obtain first artificial intelligence AI input data. For details, refer to descriptions in S501. Details are not described herein again.

The second image processing module 1220 is configured to perform second image processing on second image data, to obtain second AI input data. Exposure duration corresponding to the first AI input data is different from exposure duration corresponding to the second AI input data, or a dynamic range corresponding to the first AI input data is different from a dynamic range corresponding to the second AI input data, and both the first image data and the second image data are raw image data generated by an image sensor. For details, refer to descriptions in S502. Details are not described herein again.

The AI recognition module 1230 is configured to perform target recognition based on the first AI input data and the second AI input data, and determine target information. For details, refer to descriptions in S503. Details are not described herein again.

In a possible implementation, both the first image processing and the second image processing are linear processing, image content corresponding to the first image data is the same as image content corresponding to the second image data, and exposure duration corresponding to the first image data is different from exposure duration corresponding to the second image data. For details, refer to descriptions in FIG. 6. Details are not described herein again.

In a possible implementation, image data output by the image sensor is one stream of image data.

The target recognition apparatus 120 further includes a splitting module, configured to split the image data output by the image sensor, to obtain the first image data and the second image data. For details, refer to descriptions in FIG. 11. Details are not described herein again.

In a possible implementation, the first image processing is wide dynamic range WDR processing, the second image processing is linear processing, image content corresponding to the first image data is the same as image content corresponding to the second image data, and exposure duration corresponding to the first image data is different from exposure duration corresponding to the second image data.

The first image processing module 1210 is specifically configured to perform first image processing based on the first image data and the second image data, to obtain the first AI input data.

The target recognition apparatus 120 further includes a third image processing module, configured to perform second image processing on the first image data, to obtain third AI input data.

The AI recognition module 1230 is specifically configured to perform target recognition based on the first AI input data, the second AI input data, and the third AI input data, and determine the target information. For details, refer to descriptions in FIG. 7. Details are not described herein again.

In a possible implementation, the first image processing module 1210 is specifically configured to:
perform first image processing based on the first image data, the second image data, and third image data, to obtain the first AI input data.

The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data. For details, refer to descriptions in FIG. 9. Details are not described herein again.

In a possible implementation, the target recognition apparatus 120 further includes a fourth image processing module, configured to perform second image processing on the third image data, to obtain fourth AI input data.

The AI recognition module 1230 is specifically configured to perform target recognition based on the first AI input data, the second AI input data, the third AI input data, and the fourth AI input data, and determine the target information. For details, refer to descriptions in FIG. 8. Details are not described herein again.

In a possible implementation, the target recognition apparatus 120 further includes a fourth image processing module, configured to:
perform second image processing on the third image data, to obtain fourth AI input data.

The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data.

The AI recognition module 1230 is specifically configured to:
perform target recognition based on the first AI input data, the second AI input data, the third AI input data, and the fourth AI input data, and determine the target information. For details, refer to descriptions in FIG. 10. Details are not described herein again.

In a possible implementation, the target recognition apparatus 120 further includes:
a transmission display module, configured to send the first AI input data to a display; and/or
a storage module, configured to store the first AI input data and the second AI input data.

In a possible implementation, the target recognition apparatus 120 further includes:
an execution module, configured to execute a target event based on the target information.

The target event includes at least one of the following: displaying the target information in an image displayed by the display, marking, based on the target information, a target object in an image displayed by the display, uploading the target information to a cloud, or generating a notification message based on the target information. The image displayed by the display is an image displayed based on the first AI input data.

In a possible implementation, when the target event is displaying the target information in the image displayed by the display or marking, based on the target information, the target object in the image displayed by the display, the execution module is the display.

In a possible implementation, when the target event is uploading the target information to the cloud or generating the notification message based on the target information, the execution module is a communication module or a transmission module.

In a possible implementation, image data output by the image sensor is image data output for a target scene. The target scene includes a bright area and a dark area. The bright area is an area whose brightness is greater than a first threshold, and the dark area is an area whose brightness is less than a second threshold. The exposure duration corresponding to the first image data is greater than the exposure duration corresponding to the second image data.

The AI recognition module 1230 is specifically configured to:
obtain, based on the first AI input data, target information corresponding to the dark area in the target scene; and
obtain, based on the second AI input data, target information corresponding to the bright area in the target scene. For details, refer to descriptions in FIG. 6. Details are not described herein again.

In a possible implementation, the image data output by the image sensor is image data output for a target scene. The target scene includes a bright area and a dark area. The bright area is an area whose brightness is greater than a first threshold, and the dark area is an area whose brightness is less than a second threshold. The exposure duration corresponding to the first image data is greater than the exposure duration corresponding to the second image data.

The AI recognition module 1230 is specifically configured to:
obtain, based on the second AI input data, target information corresponding to the bright area in the target scene;
obtain, based on the third AI input data, target information corresponding to the dark area in the target scene; and
obtain, based on the first AI input data, target information corresponding to another area other than the dark area and the bright area in the target scene. For details, refer to descriptions in FIG. 7 or FIG. 9. Details are not described herein again.

In a possible implementation, the image data output by the image sensor is image data output for a target scene. The target scene includes a bright area, a dark area, and an intermediate area. The bright area is an area whose brightness is greater than a first threshold, the dark area is an area whose brightness is less than a second threshold, and the intermediate area is an area whose brightness is greater than a third threshold and less than a fourth threshold. The third threshold is greater than or equal to the second threshold, and the fourth threshold is less than or equal to the first threshold. The exposure duration corresponding to the first image data is greater than the exposure duration corresponding to the third image data, and the exposure duration corresponding to the third image data is greater than the exposure duration corresponding to the second image data.

The AI recognition module 1230 is specifically configured to:
obtain, based on the second AI input data, target information corresponding to the bright area in the target scene;
obtain, based on the third AI input data, target information corresponding to the dark area in the target scene;
obtain, based on the fourth AI input data, target information corresponding to the intermediate area in the target scene; and
obtain, based on the first AI input data, target information corresponding to another area other than the bright area, the dark area, and the intermediate area in the target scene. For details, refer to descriptions in FIG. 8 or FIG. 10. Details are not described herein again.

During implementation of this embodiment of this application, target recognition may be performed on the two streams of AI input data by using the AI algorithm. Different AI input data corresponds to different exposure duration. Target information of areas with different brightness in the target photographing scene may be determined based on AI input data corresponding to different exposure duration, to comprehensively obtain the final target recognition result. For example, target information of a bright area may be obtained based on a short frame with small exposure duration, and target information of a dark area may be obtained based on a long frame with large exposure duration. Therefore, it can be ensured that a bright area and a dark area in a wide dynamic range scene can be clearly displayed at the same time, and AI target recognition accuracy in the wide dynamic range scene can also be ensured.

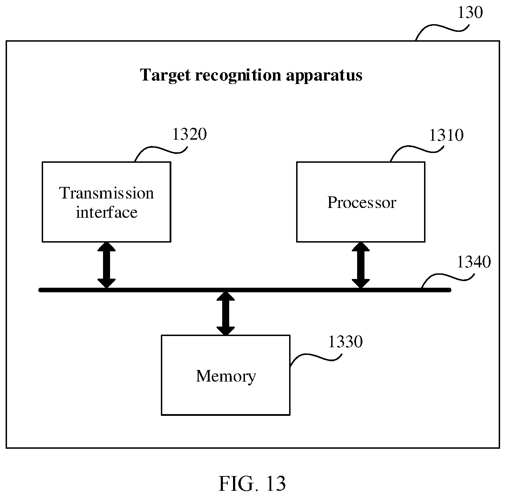

FIG. 13 shows another target recognition apparatus according to an embodiment of this application. A target recognition apparatus 130 includes a processor 1310, a transmission interface 1320, and a memory 1330. The processor 1310, the memory 1330, and the transmission interface 1320 are connected to each other by using a bus 1340.

The memory 1330 includes but is not limited to random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1330 is configured to store related instructions and data. The transmission interface 1320 is configured to receive and send data.

The processor 1310 may be one or more central processing units (central processing unit, CPU). When the processor 1310 is a CPU, the CPU may be a single-core CPU or a multi-core CPU.

The processor 1310 in the target recognition apparatus 130 is configured to read program code stored in the memory 1330, to:
perform first image processing on first image data, to obtain first artificial intelligence AI input data;
perform second image processing on second image data, to obtain second AI input data, where exposure duration corresponding to the first AI input data is different from exposure duration corresponding to the second AI input data, or a dynamic range corresponding to the first AI input data is different from a dynamic range corresponding to the second AI input data, and both the first image data and the second image data are raw image data generated by an image sensor; and
perform target recognition based on the first AI input data and the second AI input data, and determine target information.

In a possible implementation, both the first image processing and the second image processing are linear processing, image content corresponding to the first image data is the same as image content corresponding to the second image data, and exposure duration corresponding to the first image data is different from exposure duration corresponding to the second image data.

In a possible implementation, image data output by the image sensor is one stream of image data.

Before performing first image processing on the first image data, the processor 1310 is further configured to:
split the image data output by the image sensor, to obtain the first image data and the second image data.

In a possible implementation, the first image processing is wide dynamic range WDR processing, the second image processing is linear processing, image content corresponding to the first image data is the same as image content corresponding to the second image data, and exposure duration corresponding to the first image data is different from exposure duration corresponding to the second image data.

When performing first image processing on the first image data, to obtain the first AI input data, the processor 1310 is specifically configured to:
perform first image processing based on the first image data and the second image data, to obtain the first AI input data.

The processor 1310 further performs second image processing on the first image data, to obtain third AI input data.

When performing target recognition based on the first AI input data and the second AI input data, and determining the target information, the processor 1310 is specifically configured to:
perform target recognition based on the first AI input data, the second AI input data, and the third AI input data, and determine the target information.

In a possible implementation, when performing first image processing based on the first image data and the second image data, to obtain the first AI input data, the processor 1310 specifically performs first image processing based on the first image data, the second image data, and third image data, to obtain the first AI input data.

The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data.

In a possible implementation, the processor 1310 is further configured to perform second image processing on the third image data, to obtain fourth AI input data.

When performing target recognition based on the first AI input data, the second AI input data, and the third AI input data, and determining the target information, the processor 1310 specifically performs target recognition based on the first AI input data, the second AI input data, the third AI input data, and the fourth AI input data, and determines the target information.

In a possible implementation, the processor 1310 is further configured to perform second image processing on third image data, to obtain fourth AI input data.

The third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data.

When performing target recognition based on the first AI input data, the second AI input data, and the third AI input data, and determining the target information, the processor 1310 specifically performs target recognition based on the first AI input data, the second AI input data, the third AI input data, and the fourth AI input data, and determines the target information.

In a possible implementation, the processor 1310 is further configured to: send the first AI input data to a display; and/or store the first AI input data and the second AI input data.

In a possible implementation, after determining the target information, the processor 1310 is further configured to execute a target event based on the target information.

The target event includes at least one of the following: displaying the target information in an image displayed by the display, marking, based on the target information, a target object in an image displayed by the display, uploading the target information to a cloud, or generating a notification message based on the target information. The image displayed by the display is an image displayed based on the first AI input data.

In a possible implementation, the target recognition apparatus 130 may further include a display module. When the target event is displaying the target information in the image displayed by the display or marking, based on the target information, the processor 1310 may execute the target event by using the display module.

In a possible implementation, when the target event is uploading the target information to the cloud or generating the notification message based on the target information, the processor 1310 may execute the target event through the transmission interface 1320.

In a possible implementation, image data output by the image sensor is image data output for a target scene. The target scene includes a bright area and a dark area. The bright area is an area whose brightness is greater than a first threshold, and the dark area is an area whose brightness is less than a second threshold. The exposure duration corresponding to the first image data is greater than the exposure duration corresponding to the second image data.

When performing target recognition based on the first AI input data and the second AI input data, and determining the target information, the processor 1310 is specifically configured to:
obtain, based on the first AI input data, target information corresponding to the dark area in the target scene; and
obtain, based on the second AI input data, target information corresponding to the bright area in the target scene.

In a possible implementation, image data output by the image sensor is image data output for a target scene, the target scene includes a bright area and a dark area, the bright area is an area whose brightness is greater than a first threshold, and the dark area is an area whose brightness is less than a second threshold. The exposure duration corresponding to the first image data is greater than the exposure duration corresponding to the second image data.

When performing target recognition based on the first AI input data, the second AI input data, and the third AI input data, and determining the target information, the processor 1310 is specifically configured to:
obtain, based on the second AI input data, target information corresponding to the bright area in the target scene.
obtain, based on the third AI input data, target information corresponding to the dark area in the target scene; and
obtain, based on the first AI input data, target information corresponding to another area other than the dark area and the bright area in the target scene.

In a possible implementation, the image data output by the image sensor is image data output for a target scene. The target scene includes a bright area, a dark area, and an intermediate area. The bright area is an area whose brightness is greater than a first threshold, the dark area is an area whose brightness is less than a second threshold, and the intermediate area is an area whose brightness is greater than a third threshold and less than a fourth threshold. The third threshold is greater than or equal to the second threshold, and the fourth threshold is less than or equal to the first threshold. The exposure duration corresponding to the first image data is greater than the exposure duration corresponding to the third image data, and the exposure duration corresponding to the third image data is greater than the exposure duration corresponding to the second image data.

When performing target recognition based on the first AI input data, the second AI input data, the third AI input data, and the fourth AI input data, and determining the target information, the processor 1310 is specifically configured to:
obtain, based on the second AI input data, target information corresponding to the bright area in the target scene;
obtain, based on the third AI input data, target information corresponding to the dark area in the target scene;
obtain, based on the fourth AI input data, target information corresponding to the intermediate area in the target scene; and
obtain, based on the first AI input data, target information corresponding to another area other than the bright area, the dark area, and the intermediate area in the target scene.

It should be noted that, for implementation of each operation, refer to corresponding descriptions in the method embodiment shown in FIG. 5.

During implementation of this embodiment of this application, target recognition may be performed on the two streams of AI input data by using the AI algorithm. Different AI input data corresponds to different exposure duration. Target information of areas with different brightness in the target photographing scene may be determined based on AI input data corresponding to different exposure duration, to comprehensively obtain the final target recognition result. For example, target information of a bright area may be obtained based on a short frame with small exposure duration, and target information of a dark area may be obtained based on a long frame with large exposure duration. Therefore, it can be ensured that a bright area and a dark area in a wide dynamic range scene can be clearly displayed at the same time, and AI target recognition accuracy in the wide dynamic range scene can also be ensured.

An embodiment of this application further provides a chip system. The chip system includes at least one processor, a memory, and an interface circuit, the memory, a transceiver, and the at least one processor are interconnected by using a line, and at least one memory stores instructions. When the instructions are executed by the processor, the method procedure shown in FIG. 5 is implemented.

An embodiment of this application further provides a computer-readable storage medium. The computer-readable storage medium stores instructions. When the instructions are run on a target recognition apparatus, the method procedure shown in FIG. 5 is implemented. When each module in the target recognition apparatus is implemented in the form of a software functional unit and is sold or used as an independent product, the integrated unit may be stored in the computer-readable storage medium.

All or some of the embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state disk, SSD)), or the like.

An embodiment of this application further provides a computer program product. When the computer program product is run on a target recognition apparatus, the method procedure shown in FIG. 5 is implemented.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The storage medium may be a magnetic disk, an optical disc, a read-only memory (read-only memory, ROM), a random access memory (random access memory, RAM), or the like.

A sequence of the steps of the method in embodiments of this application may be adjusted, combined, or removed based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A target recognition method, comprising:
performing first image processing on first image data, to obtain first artificial intelligence AI input data;
performing second image processing on second image data, to obtain second AI input data, wherein exposure duration corresponding to the first AI input data is different from exposure duration corresponding to the second AI input data, or a dynamic range corresponding to the first AI input data is different from a dynamic range corresponding to the second AI input data, and both the first image data and the second image data are raw image data generated by an image sensor; and
performing target recognition based on the first AI input data and the second AI input data, and determining target information.

2. The method according to claim 1, wherein both the first image processing and the second image processing are linear processing, image content corresponding to the first image data is the same as image content corresponding to the second image data, and exposure duration corresponding to the first image data is different from exposure duration corresponding to the second image data.

3. The method according to claim 1, wherein image data output by the image sensor is one stream of image data, and before the performing first image processing on first image data, the method further comprises:
splitting the image data output by the image sensor, to obtain the first image data and the second image data.

4. The method according to claim 1 or 3, wherein the first image processing is wide dynamic range WDR processing, the second image processing is linear processing, image content corresponding to the first image data is the same as image content corresponding to the second image data, and exposure duration corresponding to the first image data is different from exposure duration corresponding to the second image data;
the performing first image processing on first image data, to obtain first AI input data comprises:
performing first image processing based on the first image data and the second image data, to obtain the first AI input data;
the method further comprises: performing second image processing on the first image data, to obtain third AI input data; and
the performing target recognition based on the first AI input data and the second AI input data, and determining target information comprises:
performing target recognition based on the first AI input data, the second AI input data, and the third AI input data, and determining the target information.

5. The method according to claim 4, wherein the performing first image processing based on the first image data and the second image data, to obtain the first AI input data comprises:
performing first image processing based on the first image data, the second image data, and third image data, to obtain the first AI input data, wherein the third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data.

6. The method according to claim 5, further comprising:
performing second image processing on the third image data, to obtain fourth AI input data; and
the performing target recognition based on the first AI input data, the second AI input data, and the third AI input data, and determining the target information comprises:
performing target recognition based on the first AI input data, the second AI input data, the third AI input data, and the fourth AI input data, and determining the target information.

7. The method according to claim 4, further comprising:
performing second image processing on third image data, to obtain fourth AI input data, wherein the third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data; and
the performing target recognition based on the first AI input data, the second AI input data, and the third AI input data, and determining the target information comprises:
performing target recognition based on the first AI input data, the second AI input data, the third AI input data, and the fourth AI input data, and determining the target information.

8. The method according to any one of claims 1 to 7, wherein the method further comprises: sending the first AI input data to a display; and/or
storing the first AI input data and the second AI input data.

9. The method according to any one of claims 1 to 8, wherein after the determining the target information, the method further comprises: executing a target event based on the target information, wherein the target event comprises at least one of the following: displaying the target information in an image displayed by the display, marking, based on the target information, a target object in an image displayed by the display, uploading the target information to a cloud, or generating a notification message based on the target information, and the image displayed by the display is an image displayed based on the first AI input data.

10. The method according to claim 2, wherein image data output by the image sensor is image data output for a target scene, the target scene comprises a bright area and a dark area, the bright area is an area whose brightness is greater than a first threshold, and the dark area is an area whose brightness is less than a second threshold;
the exposure duration corresponding to the first image data is greater than the exposure duration corresponding to the second image data; and
the performing target recognition based on the first AI input data and the second AI input data, and determining target information comprises:
obtaining, based on the first AI input data, target information corresponding to the dark area in the target scene; and
obtaining, based on the second AI input data, target information corresponding to the bright area in the target scene.

11. The method according to claim 4 or 5, wherein the image data output by the image sensor is image data output for a target scene, the target scene comprises a bright area and a dark area, the bright area is an area whose brightness is greater than a first threshold, and the dark area is an area whose brightness is less than a second threshold;
the exposure duration corresponding to the first image data is greater than the exposure duration corresponding to the second image data; and
the performing target recognition based on the first AI input data, the second AI input data, and the third AI input data, and determining the target information comprises:
obtaining, based on the second AI input data, target information corresponding to the bright area in the target scene;
obtaining, based on the third AI input data, target information corresponding to the dark area in the target scene; and
obtaining, based on the first AI input data, target information corresponding to another area other than the dark area and the bright area in the target scene.

12. The method according to claim 6 or 7, wherein the image data output by the image sensor is image data output for a target scene, the target scene comprises a bright area, a dark area, and an intermediate area, the bright area is an area whose brightness is greater than a first threshold, the dark area is an area whose brightness is less than a second threshold, the intermediate area is an area whose brightness is greater than a third threshold and less than a fourth threshold, the third threshold is greater than or equal to the second threshold, and the fourth threshold is less than or equal to the first threshold;
the exposure duration corresponding to the first image data is greater than the exposure duration corresponding to the third image data, and the exposure duration corresponding to the third image data is greater than the exposure duration corresponding to the second image data; and
the performing target recognition based on the first AI input data, the second AI input data, the third AI input data, and the fourth AI input data, and determining the target information comprises:
obtaining, based on the second AI input data, target information corresponding to the bright area in the target scene;
obtaining, based on the third AI input data, target information corresponding to the dark area in the target scene;
obtaining, based on the fourth AI input data, target information corresponding to the intermediate area in the target scene; and
obtaining, based on the first AI input data, target information corresponding to another area other than the bright area, the dark area, and the intermediate area in the target scene.

13. A target recognition apparatus, comprising:
a first image processing module, configured to perform first image processing on first image data, to obtain first artificial intelligence AI input data;
a second image processing module, configured to perform second image processing on second image data, to obtain second AI input data, wherein exposure duration corresponding to the first AI input data is different from exposure duration corresponding to the second AI input data, or a dynamic range corresponding to the first AI input data is different from a dynamic range corresponding to the second AI input data, and both the first image data and the second image data are raw image data generated by an image sensor; and
an AI recognition module, configured to perform target recognition based on the first AI input data and the second AI input data, and determine target information.

14. The apparatus according to claim 13, wherein both the first image processing and the second image processing are linear processing, image content corresponding to the first image data is the same as image content corresponding to the second image data, and exposure duration corresponding to the first image data is different from exposure duration corresponding to the second image data.

15. The apparatus according to claim 13, wherein image data output by the image sensor is one stream of image data, and the apparatus further comprises a splitting module, configured to split the image data output by the image sensor, to obtain the first image data and the second image data.

16. The apparatus according to claim 13 or 15, wherein the first image processing is wide dynamic range WDR processing, the second image processing is linear processing, image content corresponding to the first image data is the same as image content corresponding to the second image data, and exposure duration corresponding to the first image data is different from exposure duration corresponding to the second image data;
the first image processing module is specifically configured to perform first image processing based on the first image data and the second image data, to obtain the first AI input data;
the apparatus further comprises a third image processing module, configured to perform second image processing on the first image data, to obtain third AI input data; and
the AI recognition module is specifically configured to perform target recognition based on the first AI input data, the second AI input data, and the third AI input data, and determine the target information.

17. The apparatus according to claim 16, wherein the first image processing module is specifically configured to perform first image processing based on the first image data, the second image data, and third image data, to obtain the first AI input data, wherein the third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data.

18. The apparatus according to claim 17, wherein the apparatus further comprises a fourth image processing module, configured to perform second image processing on the third image data, to obtain fourth AI input data; and
the AI recognition module is specifically configured to perform target recognition based on the first AI input data, the second AI input data, the third AI input data, and the fourth AI input data, and determine the target information.

19. The apparatus according to claim 16, wherein the apparatus further comprises a fourth image processing module, configured to perform second image processing on third image data, to obtain fourth AI input data, wherein the third image data is raw image data generated by the image sensor, image content corresponding to the third image data is the same as the image content corresponding to the first image data and the image content corresponding to the second image data, and exposure duration corresponding to the third image data is different from the exposure duration corresponding to the first image data and the exposure duration corresponding to the second image data; and
the AI recognition module is specifically configured to perform target recognition based on the first AI input data, the second AI input data, the third AI input data, and the fourth AI input data, and determine the target information.

20. The apparatus according to any one of claims 13 to 19, wherein the apparatus further comprises a transmission display module, configured to send the first AI input data to a display; and/or
a storage module, configured to store the first AI input data and the second AI input data.

21. The apparatus according to any one of claims 13 to 20, wherein the apparatus further comprises an execution module, configured to execute a target event based on the target information, wherein the target event comprises at least one of the following: displaying the target information in an image displayed by the display, marking, based on the target information, a target object in an image displayed by the display, uploading the target information to a cloud, or generating a notification message based on the target information, and the image displayed by the display is an image displayed based on the first AI input data.

22. The apparatus according to claim 14, wherein image data output by the image sensor is image data output for a target scene, the target scene comprises a bright area and a dark area, the bright area is an area whose brightness is greater than a first threshold, and the dark area is an area whose brightness is less than a second threshold;
the exposure duration corresponding to the first image data is greater than the exposure duration corresponding to the second image data; and
the AI recognition module is specifically configured to:
obtain, based on the first AI input data, target information corresponding to the dark area in the target scene; and
obtain, based on the second AI input data, target information corresponding to the bright area in the target scene.

23. The apparatus according to claim 16 or 17, wherein the image data output by the image sensor is image data output for a target scene, the target scene comprises a bright area and a dark area, the bright area is an area whose brightness is greater than a first threshold, and the dark area is an area whose brightness is less than a second threshold;
the exposure duration corresponding to the first image data is greater than the exposure duration corresponding to the second image data; and
the AI recognition module is specifically configured to:
obtain, based on the second AI input data, target information corresponding to the bright area in the target scene;
obtain, based on the third AI input data, target information corresponding to the dark area in the target scene; and
obtain, based on the first AI input data, target information corresponding to another area other than the dark area and the bright area in the target scene.

24. The apparatus according to claim 18 or 19, wherein the image data output by the image sensor is image data output for a target scene, the target scene comprises a bright area, a dark area, and an intermediate area, the bright area is an area whose brightness is greater than a first threshold, the dark area is an area whose brightness is less than a second threshold, the intermediate area is an area whose brightness is greater than a third threshold and less than a fourth threshold, the third threshold is greater than or equal to the second threshold, and the fourth threshold is less than or equal to the first threshold;
the exposure duration corresponding to the first image data is greater than the exposure duration corresponding to the third image data, and the exposure duration corresponding to the third image data is greater than the exposure duration corresponding to the second image data; and
the AI recognition module is specifically configured to:
obtain, based on the second AI input data, target information corresponding to the bright area in the target scene;
obtain, based on the third AI input data, target information corresponding to the dark area in the target scene;
obtain, based on the fourth AI input data, target information corresponding to the intermediate area in the target scene; and
obtain, based on the first AI input data, target information corresponding to another area other than the bright area, the dark area, and the intermediate area in the target scene.

25. A target recognition apparatus, comprising a processor and a transmission interface, wherein
the processor is configured to invoke software instructions stored in a memory, to perform the target recognition method according to any one of claims 1 to 12.

26. A computer-readable storage medium, wherein the computer-readable storage medium stores instructions, and when the instructions are run on a computer or a processor, the computer or the processor is enabled to perform the target recognition method according to any one of claims 1 to 12.

27. A computer program product comprising instructions, wherein when the computer program product is run on a computer or a processor, the computer or the processor is enabled to perform the target recognition method according to any one of claims 1 to 12.
